# EUROPÄISCHE PATENTSCHRIFT

(11) **EP 0 856 682 B1**
(45) Veröffentlichungstag und Bekanntmachung des Hinweises auf die Patenterteilung: **14.04.2004**
(21) Anmeldenummer: 98101450.9
(22) Anmeldetag: 28.01.1998
(51) Int. Cl.: F16F 15/123, F16F 15/129

(54) **Torsionsschwingungsdämpfer**
Torsional vibration damper
Amortisseur des vibrations torsionelles

(30) Priorität: 31.01.1997 DE 19703534; 03.03.1997 DE 19708327
(43) Veröffentlichungstag der Anmeldung: 05.08.1998
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, cand.-Ing., 52351 Düren (DE); Heidingsfeld, Dietmar, Dipl.-Ing., 52078 Aachen (DE)
(74) Vertreter: Castell, Klaus, Dr.

(56) Entgegenhaltungen:
- DE-A- 3 528 987
- DE-C- 19 526 051
- FR-A- 2 540 583
- FR-A- 2 568 640
- US-A- 5 540 620
- US-A- 5 590 752

## Beschreibung

Die Erfindung betrifft einen Torsionsschwingungsdämpfer, insbesondere einen Reibscheibendämpfer, mit einem Primärteil und einem Sekundärteil, das mit dem Primärteil über tangentiale Druckfedern verbunden ist, wobei zwischen Primärteil und Sekundärteil eine Zwischenscheibe angeordnet ist, auf die einerseits die tangentialen Druckfedern und andererseits Vordämpferfedern wirken, siehe DE-A-19 526 051.

Derartige Torsionsschwingungsdämpfer sind weit verbreitet und üblicherweise ist das Primärteil über tangentiale Druckfedern mit einer Zwischenscheibe verbunden, die über eine Vordämpferfeder mit dem Sekundärteil in Verbindung steht. Im Leerlauf wirkt kein nennenswertes Drehmoment zwischen Primär- und Sekundärteil und daher ist die Zwischenscheibe fest mit dem Primärteil verbunden und kleinere Schwingungen werden von der Vordämpferfeder zwischen der Zwischenscheibe und dem Sekundärteil aufgenommen. Um Resonanzen zu vermeiden sind zwischen Primärteil und Zwischenscheibe und Primärteil und Sekundärteil Dämpfungseinrichtungen angeordnet.

Da im Leerlauf das Primärteil, die tangentialen Druckfedern und die Zwischenscheibe ein fest zusammenhängendes Teil bilden, hat das Sekundärteil nur eine geringe Masse und ist daher relativ schwingungsempfindlich.

Der Erfindung liegt die Aufgabe zugrunde, die im Leerlauf auftretenden Schwingungen des Sekundärteils zu reduzieren.

Diese Aufgabe wird bei einem gattungsgem. Torsionsschwingungsdämpfer dadurch gelöst, daß die tangentialen Druckfedern zwischen Sekundärteil und Zwischenscheibe und die Vordämpferfedern zwischen Primärteil und Zwischenscheibe angeordnet sind.

Durch die erfindungsgem. Anordnung wird die Zwischenscheibe und vorallem die Masse der tangentialen Druckfedern mit dem Sekundärteil verbunden, so daß im Leerlauf das Primärteil nicht mit den schweren tangentialen Druckfedern verbunden ist. Dadurch kann das Sekundärteil sehr schwer und dadurch weniger schwingungsanfällig ausgeführt werden.

Vorteilhaft ist es, wenn die Charakteristik der Vordämpferfedern so eingestellt ist, daß die tangentialen Druckfedern ansprechen, bevor die Vordämpferfedern einen Anschlag bilden. Diese Abstimmung der tangentialen Druckfedern und der Vordämpferfedern aufeinander, bewirkt bei einem auftretenden Drehmoment eine stoßfreie Momentübertragung vom Primärteil auf das Sekundärteil. Zunächst werden die Vordämpferfedern komprimiert und bevor sie vollständig komprimiert sind oder zwischen Primärteil und Zwischenscheibe ein Anschlag angesprochen wird, werden die tangentialen Druckfedern schon leicht komprimiert, so daß ein fließender Lastübergang bei steigendem Drehmoment von der Primär- zur Sekundärseite entsteht.

Die erfindungsgem. Anordnung erlaubt es darüber hinaus, Primärteil und Zwischenscheibe ungedämpft gegeneinander verdrehbar zu halten. In der Praxis reicht eine Dämpfung zwischen dem Primärteil und dem Sekundärteil, die vorzugsweise variabel ausgeführt ist.

Besonders günstig ist eine Dämpfung, die sowohl drehzahlabhängig als auch drehmomentabhängig ist. Ein Ausführungsbeispiel zu einer derartigen Dämpfung ist in der DE 196 11 268.0 beschrieben.

Um auf engem Bauraum eine sanfte Drehmomentübertragung zu erzielen, wird vorgeschlagen, den erfindungsgemäßen Torsionsschwingungsdämpfer mit parallel geschalteten tangentialen Druckfedern, vorzugsweise unterschiedlicher Federcharakteristik auszurüsten.

Außerdem wird vorgeschlagen, die relativ kleinen Vordämpferfedern gegenüber den tangentialen Druckfedern radial innenliegend anzuordnen. Die tangentialen Druckfedern können dann am äußersten Rand des Sekundärteils, vorzugsweise sogar in U-förmigen Ausnehmungen angeordnet werden.

Ein Ausführungsbeispiel der Erfindung ist in der Zeichnung dargestellt und wird im folgenden näher beschrieben.

Es zeigt:
- Figur 1: eine schematische Gegenüberstellung der erfindungsgemäßen Anordnung zum Stand der Technik,
- Figur 2: einen Schnitt durch einen eingebauten Reibscheibendämpfer,
- Figur 3: eine Draufsicht des Reibscheibendämpfers, bei der zur Hälfte das Primärteil mit den Fensteröffnungen für die Federn dargestellt ist und
- Figur 4: eine Gegenüberstellung von vier Betriebszuständen des Reibscheibendämpfers.

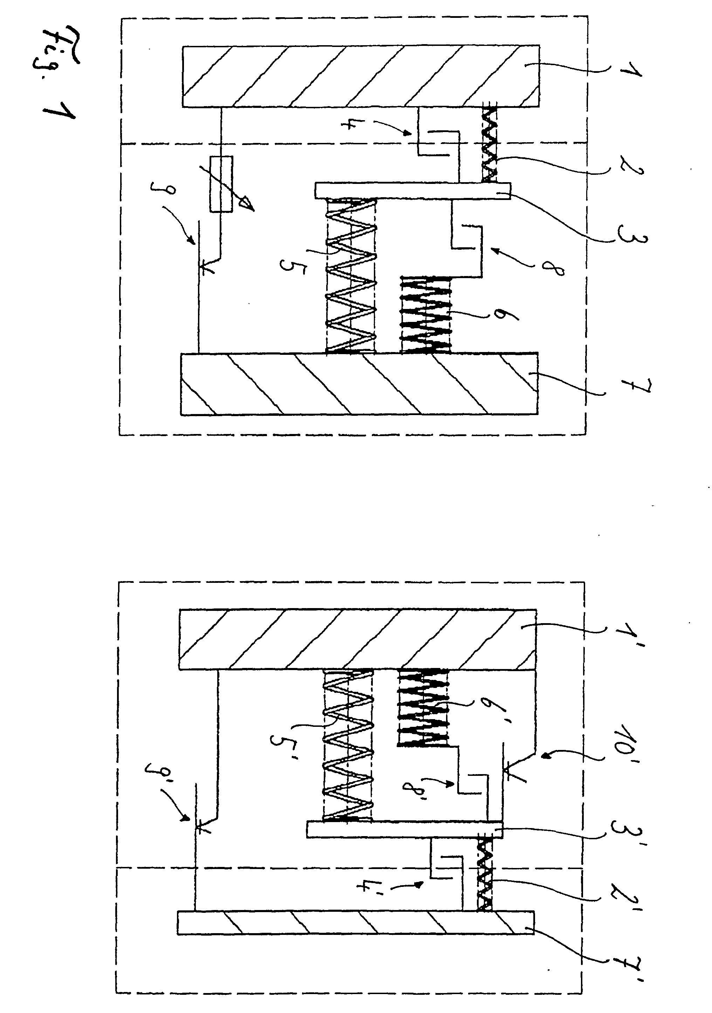

Die schematische Darstellung in Figur 1 zeigt in Bild a) einen erfindungsgem. Reibscheibendämpfer und in Bild b) einen Reibscheibendämpfer nach dem Stand der Technik. Bei dem erfindungsgemäßen Reibscheibendämpfer ist das Primärteil 1 über eine Vordämpferfeder 2 mit einer Zwischenscheibe 3 verbunden. Zwischen Primärteil 1 und Zwischenscheibe 3 ist schematisch ein Anschlag 4 eingezeichnet. Die Zwischenscheibe 3 ist über zwei parallel geschaltete Druckfedern 5 und 6 mit dem Sekundärteil 7 verbunden. Während die Druckfeder 5 direkt zwischen Zwischenscheibe 3 und Sekundärteil 7 angeordnet ist, befindet sich zwischen der Zwischenscheibe 3 und der Druckfeder 6 ein Anschlag 8, so daß die Druckfeder 6 erst ab einer bestimmten Kompression der Druckfeder 5 angesprochen wird.

Eine Dämpfung 9 ist zwischen dem Primärteil 1 und dem Sekundärteil 7 angeordnet und sorgt für eine drehzahl- und drehmomentabhängige Dämpfung.

Im Gegensatz dazu ist bei vorbekannten Reibscheibendämpfern - wie in Bild b) gezeigt - das Primärteil 1' direkt mit den Druckfedern 5' und 6' verbunden, die wiederum auf eine Zwischenscheibe 3' wirken. Der Anschlag 8' zwischen der Druckfeder 6' und der Zwischenscheibe 3' hat dieselbe Funktion wie der Anschlag 8 bei dem erfindungsgemäßen Reibscheibendämpfer. Zwischen der Zwischenscheibe 3' und dem Sekundärteil 7' ist eine Vordämpferfeder 2' und ein Anschlag 4' angeordnet, die ebenfalls, wie bei dem erfindungsgemäßen Reibscheibendämpfer, zusammenwirken.

Bei dem bekannten Ausführungsbeispiel ist darüber hinaus eine Dämpfung 9' zwischen dem Primärteil 1' und dem Sekundärteil 7' und eine Dämpfung 10' zwischen dem Primärteil 1' und der Zwischenscheibe 3' vorgesehen.

Die schematische Darstellung zeigt deutlich, daß im Leerlauf bei dem bekannten Reibscheibendämpfer das Primärteil 1' zusammen mit den Druckfedern 5' und 6' sowie der Zwischenscheibe 3' eine zusammenhängende Masse bildet, während die entsprechende Masse aus Federn 5, 6 und Zwischenscheibe 3 bei dem erfindungsgemäßen Reibscheibendämpfer mit der Sekundärseite während des Leerlaufs eine zusammenhängende Masse bildet.

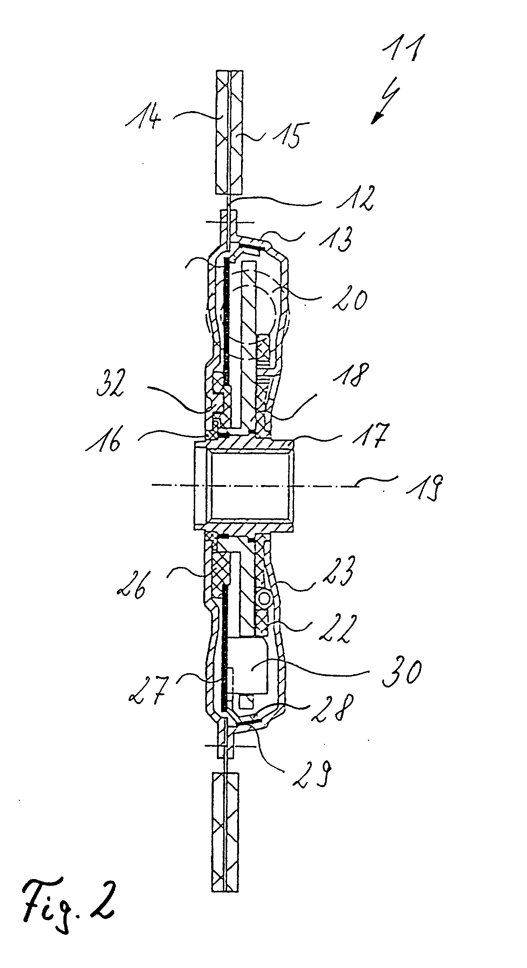

Den Aufbau eines erfindungsgemäßen Reibscheibendämpfer mit Vordämpfer zeigt Figur 2. Der Reibscheibendämpfer 11 hat an seinem radial äußeren Rand einen Blechring 12, der einen Teil des Primärteils 13 bildet und einerseits mit einem Reibelement 14 eines antriebsseitigen Schwungsrades (nicht gezeigt) und andererseits mit einem Reibelement 15 einer Kupplung (nicht gezeigt) zusammenwirkt. Das Primärteil 13 ist ein hohlscheibenartiges Gehäuse, das drehbar auf Kunststofflagern 16 sitzt, die ihrerseits auf einer Nabe 17 eines Sekundärteils 18 angeordnet sind. Die Nabe 17 ist auf eine Antriebswelle (nicht gezeigt) aufsetzbar.

Das Sekundärteil 18 ist im wesentlichen scheibenförmig ausgebildet und im Primärteil 13 aufgenommen. Es trägt mit radialem Abstand von der Drehachse 19 der Nabe 17 tangential angeordnet, relativ große Druckfedern 20, die in Fenstern 21 des Primärteils 13 angeordnet sind und dieses mit dem Sekundärteil 18 elastisch koppeln. Die tangentialen Druckfedern 20 sind so angeordnet, daß sie zwischen den Primär- und Sekundärteilen 13, 18 ein Spiel über einen "inaktiven Verdrehwinkel" von bspw. 5° zulassen. Das Primär- und das Sekundärteil 13, 18 sind zueinander zentriert angeordnet.

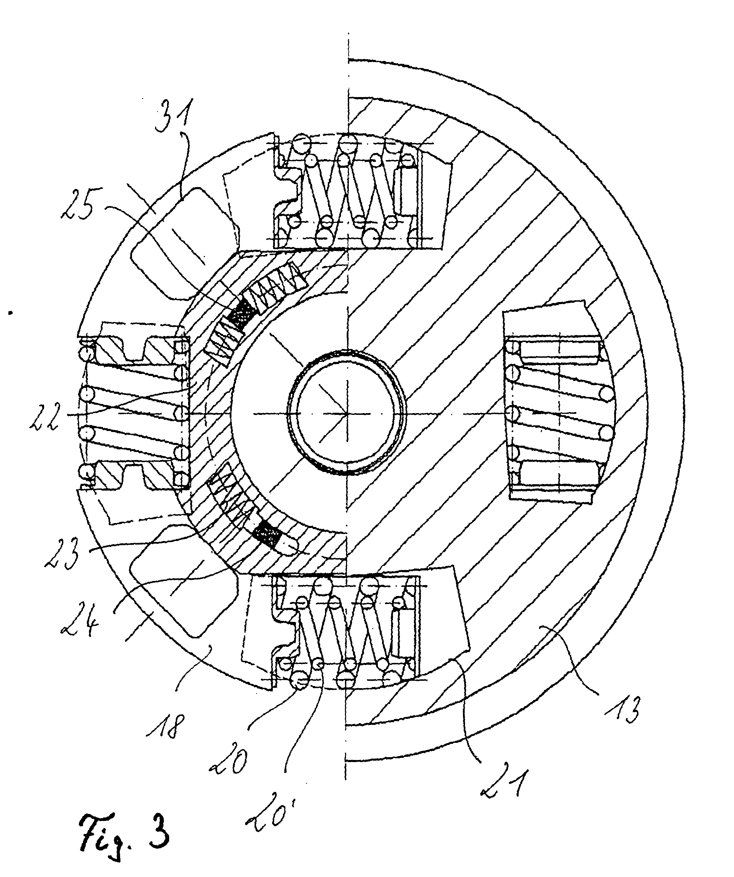

Auf dem scheibenförmigen Sekundärteil 18 liegt - wie in Figur 3 gezeigt - eine Zwischenscheibe 22, die über Vordämpferfedern 23 mit dem Primärteil 13 in Verbindung steht. Diese Zwischenscheibe 22 ist aus Kunststoff und weist auf einer Umfangslinie verteilt Fenster für radial angeordnete Vordämpferfedern 23 auf. Diese Vordämpferfedern 23 wirken bei einem Verdrehen des Sekundärteils 18 relativ zum Primärteil 13 mit einem Anschlag 24, 25 des Primärteils 13 zusammen. Über die Druckfedern 20 ist die Zwischenscheibe 22 mit dem scheibenförmig ausgebildeten Sekundärteil verbunden.

Ein Kunststoffring 26 - vgl. Fig. 2 - ist auf der den Vordämpferfedern 23 gegenüberliegenden Seite relativ zur Primärseite axial verschiebbar aber verdrehsteif angebracht. Auf diesem Kunststoffring ist eine Spinnenfeder 27 aufgebracht, die mit vier Fingern auf einen Reibkonus 28 wirkt. Dieser Reibkonus 28 wird durch die Spinnenfeder 27 in einem spitzen Winkel an eine Reibfläche 29 in der radial äußersten inneren Umfangsfläche des Primärteils 13 gedrückt.

Auf jedem der Finger der Spinnenfeder 27 ist ein Fliehgewicht 30 angebracht, das in einem Fenster 31 des Sekundärteils 18 axial beweglich ist.

Der Kunststoffring 26 mit den Spinnenfedern 27 wird durch Nocken 32 des Primärteils 13 in Abhängigkeit der Verdrehlage zwischen Primärteil 13 und Sekundärteil 18 axial verschoben, so daß die Vorspannung des Reibkonus 28 drehmomentabhängig eingestellt wird.

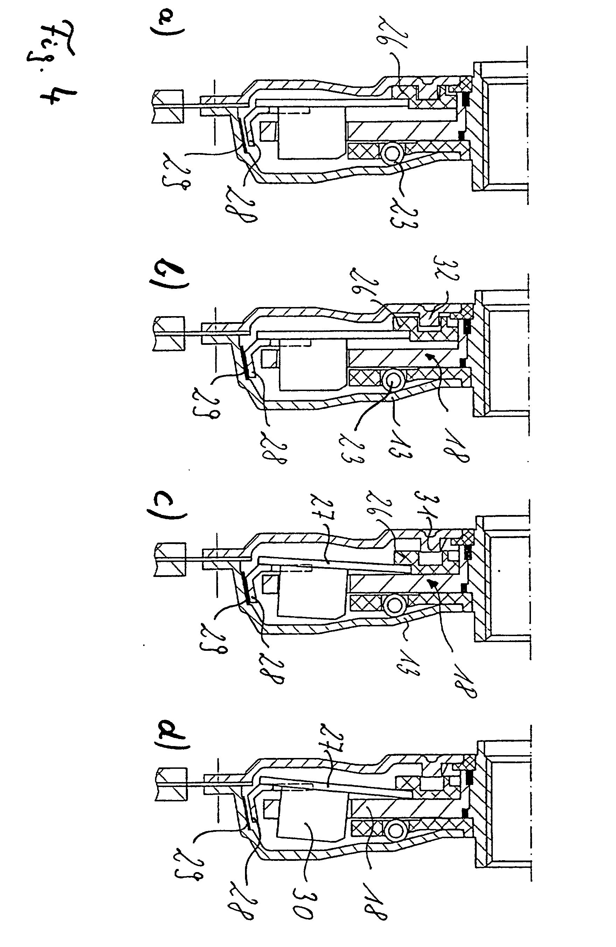

Bei der Verwendung des erfindungsgemäßen Reibscheibendämpfers ergeben sich die in Figur 4 gezeigten vier Betriebszustände.

In Figur 4a ist der Betriebszustand im Leerlauf gezeigt. Da kein Drehmoment zwischen Primär- und Sekundärteil wirkt, liegt der Ring 26 an seinem linken Anschlag und der Reibkonus 28 berührt ist Reibfläche 29 nicht. Die Dämpfung ist daher nahezu null. Da kein Drehmoment zwischen Primär- und Sekundärteil vorliegt, werden auch die Vordämpferfedern 23 nicht angesprochen.

Figur 4 b zeigt den Betriebszustand bei kleiner Drehzahl und einem geringen Drehmoment. Durch das kleine Drehmoment wird der Kunststoffring 26 durch den Nocken 32 leicht nach rechts verschoben, so daß der Reibkonus 28 mit der Reibfläche 29 in Eingriff kommt. Dadurch entsteht eine kleine Dämpfung. Gleichzeitig werden durch die Verdrehung von Primärteil 13 zum Sekundärteil 18 die Vordämpferfedern 23 angesprochen, die bei einem sehr geringen Drehmoment komprimiert werden. Die Härte der Vordämpferfedern ist jedoch so eingestellt, daß vor der vollständigen Kompression der Vordämpferfedern 23 die Druckfeder 20 anspricht. Zur Druckfeder 20 ist eine weitere Druckfeder 20' parallel geschaltet, deren Anordnung und Federcharakteristik so gewählt ist, daß sie nach einer anfänglichen Kompression der Feder 20 angesprochen wird und bei höherem Drehmoment mit der Feder 20' zusammenwirkt (vgl. Fig. 3).

Die Situation bei einem höheren Drehmoment ist in Figur 4c gezeigt. Hier liegt ein großes Drehmoment und eine kleine Drehzahl vor. In Folge des erhöhten Drehmoments ist die relative Lage von Primärteil 13 und Sekundärteil 18 gegeneinander stark verschoben, so daß der Nocken 31 den Kunststoffring 26 vollständig auf die rechte Seite verschoben hat. Dadurch werden die Spinnenfedern 27 mit erhöhter Kraft an den Reibkonus 28 gedrückt, der wiederum dämpfend mit der Reibfläche 29 zusammenwirkt. In diesem Betriebszustand wird die maximale Dämpfung erreicht.

In Figur 4d ist der Betriebszustand bei großem Drehmoment und großer Drehzahl gezeigt. Durch die erhöhte Drehzahl wirkt eine Zentrifugalkraft auf das Fliehgewicht 30, die eine Verschiebung der Spinnenfeder 27 im radial außen liegenden Bereich nach links zur Folge hat. Diese Kraft wirkt dem Druck der Spinnenfeder 27 gegen den Reibkonus 28 entgegen und verringert somit die Andrückkraft des Reibkonus gegen die Reibfläche 29.

Bei sich weiter erhöhender Drehzahl bewegt sich das Fliehgewicht 30 immer weiter radial nach außen innerhalb des Fensters 25 des Sekundärteils 18 - vgl. Fig. 3 -. Das Fliehgewicht 30 kann sich dabei im Fenster 25 des Sekundärteils 18 soweit radial nach außen bewegen, bis es am radial äußeren Rand des Fensters 25 anstößt. In dieser Position ist die Spinnenfeder 27 soweit nach links gedrückt, daß sie keine Kraft mehr auf den Reibkonus 28 ausübt. Der Reibkonus wird daher außer Eingriff gebracht und die Dämpfung geht auf etwa null zurück.

Die beschriebene Konstruktion des Reibscheibendämpfers zeigt, daß alle Bauteile des Reibscheibendämpfers mit Ausnahme der Vordämpferfedern und des Primärteils, d. h. des Gehäuses, der Sekundärseite zugeordnet sind. Die Sekundärseite erhält somit ein möglichst großes Trägheitsmoment, das zu einer sehr guten Leerlaufentkopplung führt.

## Patentansprüche

1. Torsionsschwingungsdämpfer, insbesondere Reibscheibendämpfer, mit einem Primärteil und einem Sekundärteil, das mit dem Primärteil über tangentiale Druckfedern verbunden ist, wobei zwischen Primärteil und Sekundärteil eine Zwischenscheibe angeordnet ist, auf die einerseits die tangentialen Druckfedern und andererseits Vordämpferfedern wirken, **dadurch gekennzeichnet, daß** die tangentialen Druckfedern zwischen Sekundärteil und Zwischenscheibe und die Vordämpferfedern zwischen Primärteil und Zwischenscheibe angeordnet sind.

2. Torsionsschwingungsdämpfer nach Anspruch 1, **dadurch gekennzeichnet, daß** die Charakteristik der Vordämpferfedern so eingestellt ist, daß die tangentialen Druckfedern ansprechen, bevor die Vordämpferfedern einen Anschlag bilden.

3. Torsionsschwingungsdämpfer nach einem der vorhergehenden Ansprüche, **dadurch gekennzeichnet, daß** Primärteil und Zwischenscheibe ungedämpft gegeneinander verdrehbar sind.

4. Reibscheibendämpfer nach einem der vorhergehenden Ansprüche, **dadurch gekennzeichnet, daß** zwischen dem Primärteil und dem Sekundärteil eine variable Dämpfung angeordnet ist.

5. Torsionsschwingungsdämpfer nach Anspruch 4, **dadurch gekennzeichnet, daß** die Dämpfung drehzahlabhängig ist.

6. Torsionsschwingungsdämpfer nach Anspruch 4 oder 5, **dadurch gekennzeichnet, daß** die Dämpfung drehmomentabhängig ist.

7. Torsionsschwingungsdämpfer nach einem der vorhergehenden Ansprüche, **dadurch gekennzeichnet, daß** die tangentialen Druckfedern parallel geschaltete Federn, vorzugsweise unterschiedlicher Federcharakteristik, aufweisen.

8. Torsionsschwingungsdämpfer nach einem der vorhergehenden Ansprüche, **dadurch gekennzeichnet, daß** die Vordämpferfedern gegenüber den tangentialen Druckfedern radial innenliegend angeordnet sind.

9. Torsionsschwingungsdämpfer nach einem der vorhergehenden Ansprüche, **dadurch gekennzeichnet, daß** die tangentialen Druckfedern in U-förmigen Ausnehmungen am äußeren Rand des Sekundärteils angeordnet sind.

## Claims

1. A torsional vibration damper, more specifically a friction disk damper, having a primary part and a secondary part connected to the primary part by tangential compression springs, a shim disk, which is subjected to the action of the tangential compression springs on the one hand and of pre-damper springs on the other hand, being disposed between primary and secondary part, **characterized in that** the tangential compression springs are disposed between the secondary part and the shim disk and the pre-damper springs between the primary part and the shim disk.

2. The torsional vibration damper according to claim 1, **characterized in that** the characteristic feature of the pre-damper spring is adjusted so that the tangential compression springs react before the pre-damper springs are compressed to form a stop.

3. The torsional vibration damper according to one of the afore mentioned claims, **characterized in that** primary part and shim disk are rotatable relative to each other without being damped.

4. A friction disk damper according to one of the afore mentioned claims, **characterized in that** a variable damping member is disposed between the primary part and the secondary part.

5. The torsional vibration damper according to claim 4, **characterized in that** the damping effect is speed-dependent.

6. The torsional vibration damper according to claim 4 or 5, **characterized in that** the damping effect is torque-dependent.

7. The torsional vibration damper according to one of the afore mentioned claims, **characterized in that** the tangential compression springs comprise springs, preferably springs having different characteristic features, that are placed in parallel.

8. The torsional vibration damper according to one of the afore mentioned claims, **characterized in that**, relative to the tangential compression springs, the pre-damper springs are disposed radially inward.

9. The torsional vibration damper according to one of the afore mentioned claims, **characterized in that** the tangential compression springs are disposed in U-shaped recesses at the outer edge of the secondary part.

## Revendications

1. Amortisseur de vibration de torsion, notamment amortisseur à disque de friction, avec une partie primaire et une partie secondaire reliée à la partie primaire par l'intermédiaire de ressorts de pression tangentiels, une rondelle intermédiaire sur laquelle agissent d'une part les ressorts de pression tangentiels et d'autre part des ressorts pré-amortisseurs étant disposée entre la partie primaire et la partie secondaire, **caractérisé en ce que** les ressorts de pression tangentiels sont disposés entre la partie secondaire et la rondelle intermédiaire et que les ressorts pré-amortisseurs sont disposés entre la partie primaire et la rondelle intermédiaire.

2. Amortisseur de vibration de torsion selon la revendication 1, **caractérisé en ce que** la caractéristique des ressorts pré-amortisseurs est réglée de manière à ce que les ressorts de pression tangentiels répondent avant que les ressorts pré-amortisseurs n'arrivent en butée.

3. Amortisseur de vibration de torsion selon l'une quelconque des revendications précédentes, **caractérisé en ce que** la partie primaire et la rondelle intermédiaire sont mobiles en rotation l'une par rapport à l'autre sans amortissement.

4. Amortisseur à disque de friction selon l'une quelconque des revendications précédentes, **caractérisé en ce qu'**un système d'amortissement variable est disposé entre la partie primaire et la partie secondaire.

5. Amortisseur de vibration de torsion selon la revendication 4, **caractérisé en ce que** l'amortissement est fonction du nombre de tours.

6. Amortisseur de vibration de torsion selon la revendication 4 ou 5, **caractérisé en ce que** l'amortissement est fonction du couple.

7. Amortisseur de vibration de torsion selon l'une quelconque des revendications précédentes, **caractérisé en ce que** les ressorts de pression tangentiels comportent des ressorts montés en parallèle ayant de préférence des caractéristiques différentes.

8. Amortisseur de vibration de torsion selon l'une quelconque des revendications précédentes, **caractérisé en ce que** par rapport aux ressorts de pression tangentiels les ressorts pré-amortisseurs sont radialement disposés à l'intérieur.

9. Amortisseur de vibration de torsion selon l'une quelconque des revendications précédentes, **caractérisé en ce que** les ressorts de pression tangentiels sont disposés dans des évidements en U ménagés dans le bord externe de la partie secondaire.
